# EUROPÄISCHE PATENTANMELDUNG

(11) **EP 1 513 174 A2**
(43) Veröffentlichungstag der Anmeldung: **09.03.2005**
(21) Anmeldenummer: 04104208.6
(22) Anmeldetag: 02.09.2004
(51) Int. Cl.: H01H 19/10, H01H 5/02, H03K 17/97

(54) **Betätigungsvorrichtung zur drehbaren Betätigung**

(30) Priorität: 05.09.2003 US 656771
(71) Anmelder: DEERE & COMPANY, Moline, Illinois 61265-8098 (US)
(72) Erfinder: Easton, David Joseph, Cedar Falls, IA 50613-2021 (US)
(74) Vertreter: Holst, Sönke, Dr.

(57) **Zusammenfassung**

Die vorliegende Erfindung betrifft eine Betätigungsvorrichtung zur drehbaren Betätigung, welche aufgrund einer magnetischen Wirkungsweise mehrere Rastpositionen aufweist. Die Betätigungsvorrichtung umfasst ein inneres Teil (22), ein äußeres Teil (18), eine Vielzahl innerer Magnete (40, 42), eine Vielzahl äußerer Magnete (50, 52) und einen Magnetfeldsensor (44). Das äußere Teil (18) nimmt das innere Teil (22) zumindest teilweise auf. Das innere Teil (22) ist zu dem äußeren Teil (18) verdrehbar angeordnet. Die inneren Magnete (40, 42) sind regelmäßig und peripher an dem inneren Teil (22) angeordnet. Die inneren Magnete (40, 42) weisen in radialer Richtung ausgerichtete magnetische Nord- und Südpole auf, wobei abwechselnd benachbarte innere Magnete (40, 42) abwechselnd in radialer Richtung nach außen ausgerichtete Nord- und Südpole aufweisen. Die äußeren Magnete (50, 52) sind regelmäßig an dem äußeren Teil (18) angeordnet. Die äußeren Magnete (50, 52) weisen in radialer Richtung ausgerichtete magnetische Nord- und Südpole auf, wobei abwechselnd benachbarte äußere Magnete (50, 52) abwechselnd in radialer Richtung nach innen ausgerichtete Nord- und Südpole aufweisen. Die inneren und äußeren Magnete (40, 42, 50, 52) ziehen sich gegenseitig an und/oder stoßen sich gegenseitig ab, um eine Vielzahl von Rastpositionen zu definieren, wenn das innere Teil (22) gegenüber dem äußeren Teil (18) gedreht wird. Der Magnetfeldsensor (44) generiert ein von der Drehung des inneren Teils (22) gegenüber dem äußeren Teil (18) abhängiges Signal.

## Beschreibung

Die Erfindung betrifft eine Betätigungsvorrichtung zur drehbaren Betätigung, welche aufgrund einer magnetischen Wirkungsweise mehrere Rastpositionen aufweist.

Aus dem Stand der Technik sind Betätigungs- bzw. Steuervorrichtungen mit Gebern bekannt, welche elektrische Signale erzeugen und welche aufgrund einer mechanischen Wirkungsweise Rastpositionen aufweisen. So sind beispielsweise Betätigungsvorrichtungen zur Steuerung von Fahrzeugfunktionen bekannt, welche Rastpositionen verwenden, um dem Bediener eine taktile Rückkopplung in Abhängigkeit der Manipulation der Betätigungsvorrichtung zu geben. Es ist wünschenswert, die die elektrischen Signale erzeugenden Vorrichtungen mit einem mechanischen Bedienungseindruck zu versehen. Da jedoch die Vorrichtungen, die aufgrund einer mechanischen Wirkungsweise Rastpositionen zur Verfügung stellen, der Reibung und einem mechanischen Verschleiß unterliegen, ist das Bereitstellen einer taktilen Rückkopplung auf mechanischem Weg über die gesamten Lebensdauer einer solchen Vorrichtung problematisch, wenn nicht eine Kalibrierung oder anfängliche Einstellung und gegebenenfalls periodisch wiederholende Einstellungen der Vorrichtung erfolgen.

Aus der US 3 934 216 ist eine Betätigungsvorrichtung zur drehbaren Betätigung bekannt, welche aufgrund einer magnetischen Wirkungsweise mehrere Rastpositionen aufweist, was mit Hilfe eines Rotors und eines Stators mit sandwichartig dazwischen angeordneten Magneten gebildet wird. Die magnetischen Pole der Magnete sind in axialer Richtung ausgerichtet und Variationen im Magnetfeld werden mit Hilfe von in radialer Richtung abragenden inneren und äußeren Polteilen bewirkt. Die in radialer Richtung abragenden Polteile erhöhen jedoch die radiale Ausdehnung der Betätigungsvorrichtung und der Rasteffekt ist begrenzt, da er lediglich durch die Unterschiede der magnetischen Anziehungskräfte bewirkt wird.

Die der Erfindung zugrunde liegende Aufgabe wird darin gesehen, eine Betätigungsvorrichtung der eingangs genannten Art anzugeben, durch die die vorgenannten Probleme überwunden werden. Insbesondere soll eine Betätigungsvorrichtung angegeben und weitergebildet werden, welche möglichst wenig Bauraum in Anspruch nimmt und bei welcher der Rasteffekt stärker ausgebildet ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Betätigungsvorrichtung zur drehbaren Betätigung weist mehrere Rastpositionen auf, welche aufgrund einer magnetischen Wirkungsweise erzeugbar sind. Die Betätigungsvorrichtung umfasst ein inneres Teil, ein äußeres Teil, eine Vielzahl innerer Magnete, eine Vielzahl äußerer Magnete und einen Magnetfeldsensor. Das äußere Teil nimmt das innere Teil zumindest teilweise auf. Das innere Teil ist zu dem äußeren Teil verdrehbar angeordnet. Die inneren Magnete sind in regelmäßigem Abstand und peripher an dem inneren Teil angeordnet. Die inneren Magnete weisen in radialer Richtung ausgerichtete magnetische Nord- und Südpole auf, wobei abwechselnd benachbarte innere Magnete abwechselnd in radialer Richtung nach außen ausgerichtete Nord- und Südpole aufweisen. Die äußeren Magnete sind in regelmäßigem Abstand an dem äußeren Teil angeordnet. Die äußeren Magnete weisen in radialer Richtung ausgerichtete magnetische Nord- und Südpole auf, wobei abwechselnd benachbarte äußere Magnete abwechselnd in radialer Richtung nach innen ausgerichtete Nord- und Südpole aufweisen. Die inneren und äußeren Magnete ziehen sich gegenseitig an und/oder stoßen sich gegenseitig ab, um eine Vielzahl von Rastpositionen zu definieren, wenn das innere Teil gegenüber dem äußeren Teil gedreht wird. Der Magnetfeldsensor generiert ein von der Drehung des inneren Teils gegenüber dem äußeren Teil abhängiges Signal.

In einer bevorzugten Ausführungsform weist das innere Teil einen ersten Kranz bzw. hohlzylinderförmigen Abschnitt auf. Die inneren Magnete sind an dem ersten Kranz angeordnet. Das äußere Teil weist einen zweiten Kranz bzw. hohlzylinderförmigen Abschnitt auf, welcher zumindest teilweise den ersten Kranz aufnimmt. Die äußeren Magnete sind an dem zweiten Kranz angeordnet.

Die inneren Magnete könnten ein erstes Winkelmaß zueinander aufweisen und die äußeren Magnete könnten ein zweites Winkelmaß zueinander aufweisen. Unter dem Begriff Winkelmaß in diesem Zusammenhang ist insbesondere zu verstehen, dass zwei Magnete in umfangsmäßiger Richtung unter einem vorgebbaren Winkel angeordnet sind. Hierbei könnten zwei benachbarte Magnete unmittelbar aneinandergrenzend angeordnet sein oder in umfangsmäßiger Richtung einen Abstand voneinander aufweisen. Vorzugsweise entspricht das erste Winkelmaß im Wesentlichen dem zweiten Winkelmaß. Ganz besonders bevorzugt grenzen jeweils zwei benachbarte innere Magnete einander an und haben in umfangsmäßiger Richtung die gleiche Breite. Gleiches gilt für die äußeren Magnete.

Bevorzugt sind die inneren Magnete gegenüberliegend zu den äußeren Magneten angeordnet. Hierunter ist insbesondere zu verstehen, dass es einen magnetischen Wechselwirkungsbereich gibt, in welchem die inneren Magnete zumindest teilweise räumlich gegenüberliegend zu den äußeren Magneten positioniert sind.

Im Konkreten könnten die inneren und äußeren Magnete derart an den inneren bzw. äußeren Teilen angeordnet sein, dass zumindest ein Betriebszustand der Betätigungsvorrichtung vorgesehen ist, bei welchem die nach außen gerichteten Nordpole der inneren Magnete benachbart und/oder gegenüberliegend zu den nach innen gerichteten Südpolen der äußeren Magnete angeordnet sind. In diesem Betriebszustand sind die nach außen gerichteten Südpole der inneren Magnete benachbart und/oder gegenüberliegend zu den nach innen gerichteten Nordpolen der äußeren Magnete angeordnet. In diesem Betriebszustand ziehen sich die Magnete an.

Die inneren und äußeren Magnete könnten auch derart an den inneren bzw. äußeren Teilen angeordnet sein, dass zumindest ein weiterer Betriebszustand der Betätigungsvorrichtung vorgesehen ist, bei welchem die nach außen gerichteten Nordpole der inneren Magnete benachbart und/oder gegenüberliegend zu den nach innen gerichteten Nordpolen der äußeren Magnete angeordnet sind. In diesem Betriebszustand sind die nach außen gerichteten Südpole der inneren Magnete benachbart und/oder gegenüberliegend zu den nach innen gerichteten Südpolen der äußeren Magnete angeordnet. In diesem weiteren Betriebszustand stoßen sich die Magnete ab.

Zur Befestigung des Magnetfeldsensors könnte eine Aussparung oder ein Schlitz an dem inneren oder äußeren Teil ausgebildet sein. Der Magnetfeldsensor kann dann in dem Schlitz aufgenommen werden. Die Aussparung oder der Schlitz kann an dem ersten oder zweiten Kranz angeordnet sein. Bevorzugt ist die Aussparung oder der Schlitz an dem inneren Teil angeordnet, ganz besonders bevorzugt an einer äußeren Oberfläche des ersten Kranzes. In diesem Bereich könnten keine inneren Magnete vorgesehen sein.

Eine sichere und griffige Bedienung der erfindungsgemäßen Betätigungsvorrichtung kann dadurch erzielt werden, dass das äußere Teil eine äußere periphere Oberfläche aufweist, welche zur Betätigung mit einem Finger, insbesondere einem Daumen, eines Bedieners dient. Die Oberfläche ist vorzugsweise strukturiert und/oder gerippt ausgebildet. So könnte die Betätigungsvorrichtung beispielsweise in Form eines Daumenrads ausgebildet sein.

Die erfindungsgemäße Betätigungsvorrichtung gemäß einer ganz besonders bevorzugten Ausführungsform weist ein inneres Teil mit einer äußeren zylindrischen Oberfläche auf. Ein äußeres Teil ist vorgesehen, welches das innere Teil aufnimmt, wobei die beiden Teile relativ zueinander verdrehbar angeordnet sind. Das innere Teil umfasst eine zylindrische Oberfläche. Innere Magnete sind in der äußeren Oberfläche des inneren Teils peripher und in regelmäßigem Abstand entlang der äußeren Oberfläche angeordnet. Die inneren Magnete umfassen magnetische Pole, welche in radialer Richtung ausgerichtet sind. Zueinander abwechselnd angeordnete innere Magnete weisen jeweils abwechselnd radial nach außen gerichtete Nord- und Südpole auf. Äußere Magnete sind in der inneren Oberfläche des äußeren Teils peripher und in regelmäßigem Abstand entlang der inneren Oberfläche angeordnet. Die äußeren Magnete weisen magnetische Pole auf, welche in radialer Richtung ausgerichtet sind. Zueinander abwechselnd angeordnete äußere Magnete weisen jeweils abwechselnd radial nach innen gerichtete Nord- und Südpole auf. Wenn die inneren und die äußeren Magnete gegeneinander verdreht werden, wirken hierdurch magnetische Anziehungs- und Abstoßungskräfte, wodurch eine Vielzahl von Rastpositionen erzeugt werden. Ein Magnetfeldsensor generiert ein Signal in Abhängigkeit der relativen Drehung bzw. Rotation zwischen den inneren und äußeren Magneten.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: in einer perspektivischen Ansicht eine schematische Darstellung eines ersten Ausführungsbeispiels einer erfindungsgemäßen Betätigungsvorrichtung, welche durch Drehung bedient wird und welche aufgrund einer magnetischen Wirkungsweise mehrere Rastpositionen aufweist,
- Fig. 2: in einer perspektivischen Ansicht eine schematische Darstellung eines inneren Teils aus Fig. 1,
- Fig. 3: in einer perspektivischen Ansicht eine schematische Darstellung eines äußeren Teils aus Fig. 1 und
- Fig. 4: in einer Schnittansicht eine schematische Darstellung eines Ausschnitts der erfindungsgemäßen Betätigungsvorrichtung aus Fig. 1 im montierten Zustand.

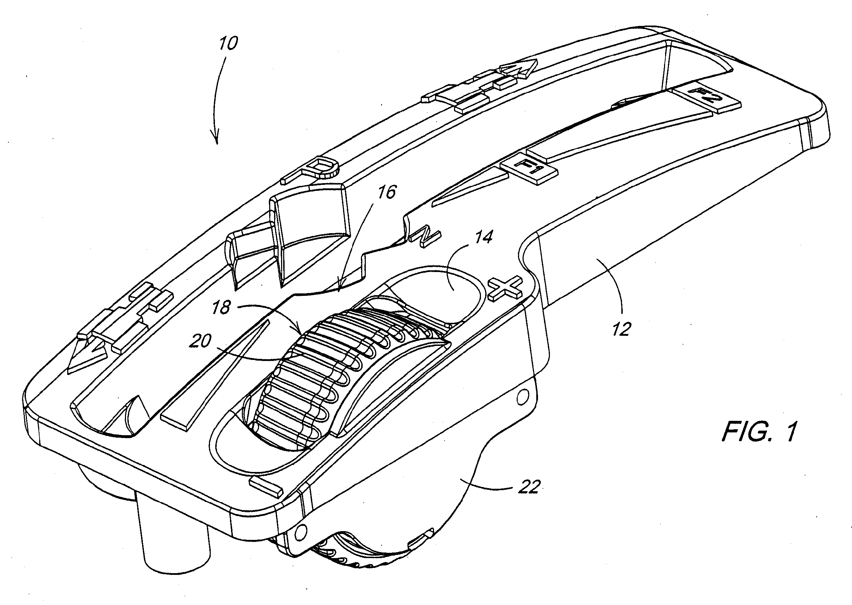

Fig. 1 zeigt eine Bedienerkontrolleinheit 10, welche ein Gehäuse 12 mit einer Öffnung bzw. Apertur 14 aufweist. Die Apertur 14 dient zur Aufnahme einer Betätigungsvorrichtung 16, welche durch Drehung bzw. Rotation betätigt wird und welche durch eine magnetische Wirkungsweise mehrere Rastpositionen aufweist. Die Betätigungsvorrichtung 16 umfasst ein im Wesentlichen zylindrisch ausgebildetes, hohles äußeres Rotationsteil 18, welches eine strukturierte bzw. gerippte äußere Oberfläche 20 aufweist, um als Daumenrad zu dienen oder um eine griffige Betätigung durch einen Finger des Bedieners zu unterstützen. Die Betätigungsvorrichtung 16 umfasst ein inneres Teil 22, welches an dem Gehäuse 12 angeordnet ist. Die Bedienerkontrolleinheit 10 kann zur Ansteuerung eines in den Fig. nicht gezeigten Fahrzeuggetriebes dienen.

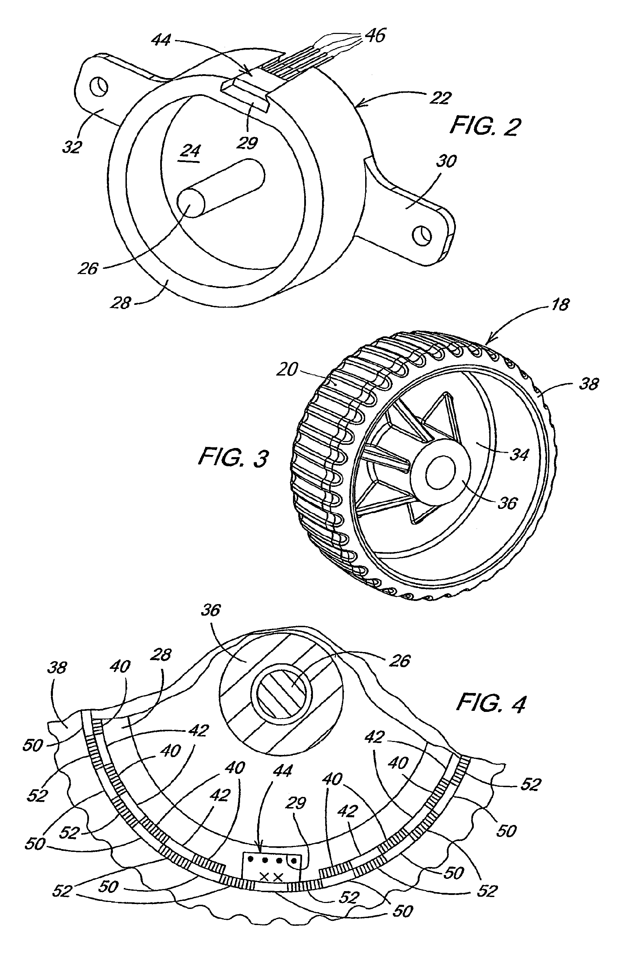

Fig. 2 ist entnehmbar, dass das innere Teil 22 eine kreisförmige Scheibe 24 aufweist, von welcher in der Mitte ein Zapfen 26 abragt. Ein im Wesentlichen zylindrisch ausgebildeter hohlförmiger Vorsprung bzw. Kranz 28 ragt in axialer Richtung von dem äußeren Bereich der Scheibe 24 ab. Eine schlitzförmige Ausnehmung bzw. Vertiefung 29 ist in dem Kranz 28 ausgebildet, um einen Hall-Sensor 44 aufzunehmen. Zwei Befestigungsvorsprünge 30, 32 ragen in radialer Richtung von gegenüberliegenden Seiten des Kranzes 28 zur Befestigung des inneren Teils 22 an dem Gehäuse 12 ab.

Fig. 3 ist entnehmbar, dass das zur Rotation dienende Teil 18 eine kreisförmige Scheibe 34 aufweist, von der ein im Wesentlichen zylindrisch ausgebildeter Vorsprung oder eine Nabe 36 zur drehbaren Aufnahme des Zapfens 26 abragt. Ein im Wesentlichen hohler, zylindrisch ausgebildeter Vorsprung bzw. Kranz 38 ragt in axialer Richtung von dem äußeren Umfang der Scheibe 34 ab.

Fig. 4 ist entnehmbar, dass eine Vielzahl innerer Magnete 40, 42 in bzw. an der äußeren Oberfläche des Kranzes 28 angeordnet und in regelmäßiger Weise und umfangsmäßig um die äußere Oberfläche des Kranzes 28 verteilt sind. Die inneren Magnete 40, 42 weisen magnetische Pole auf, die in radialer Richtung ausgerichtet sind. Die Magnete 40 weisen radial nach außen gerichtete Nordpole auf. Die alternierend angeordneten und hierzu benachbarten inneren Magnete 42 weisen nach außen gerichtete Südpole auf.

Eine Vielzahl äußerer Magnete 50, 52 ist in bzw. an der inneren Oberfläche des Kranzes 38 in regelmäßiger Weise und in umfangsmäßiger Richtung um die innere Oberfläche angeordnet. Die äußeren Magnete 50, 52 weisen magnetische Pole auf, die in radialer Richtung ausgerichtet sind. Die Magnete 50 weisen radial nach außen gerichtete Nordpole auf. Die alternierend angeordneten und hierzu benachbarten äußeren Magnete 52 weisen nach außen gerichtete Südpole auf. Der innere und äußere Kranz 28 bzw. 38 ist derart ausgebildet, dass in radialer Richtung lediglich ein kleiner Abstand bzw. Spalt zwischen den inneren Magneten 40, 42 und dem äußeren Magneten 50, 52 besteht. Die Magnete 40, 42, 50, 52 sind vorzugsweise an ihren entsprechenden Kranz 28 bzw. 38 fest angebaut bzw. eingepresst, insbesondere durch ein Spritzgussverfahren, wie es beispielsweise von der Plastiform Division der Arnold Engineering Co., 1000 East Eisenhower Avenue, Norfolk, Nebraska, U.S.A. bekannt ist.

Wenn nun der äußere Kranz 38 gegenüber dem inneren Kranz 28 gedreht bzw. rotiert wird, detektiert und generiert der Sensor 44 ein Signal, welches von der Drehposition und Drehgeschwindigkeit des äußeren Kranzes 38 abhängt. Wenn die Magnete 50 mit den Magneten 40 und die Magnete 52 mit den Magneten 42 ausgerichtet sind, ergibt sich eine magnetische Anziehungskraft zwischen jedem äußeren Magnet 50, 52 und jedem entsprechenden inneren Magnet 40, 42. Wenn die Magnete 50 zu den Magneten 42 und die Magnete 52 zu den Magneten 40 ausgerichtet sind, ergibt sich eine abstoßende magnetische Kraft zwischen jedem äußeren und jedem entsprechenden inneren Magnet. Demzufolge ist der äußere Kranz 38 in abwechselnder bzw. alternierender Weise magnetische Anziehungs- und Abstoßungskräften ausgesetzt, wenn der äußere Kranz 38 relativ zu dem inneren Kranz 28 gedreht wird. Hierdurch werden eine Vielzahl von Rastpositionen des äußeren Kranzes 38 bzw. des äußeren Rotationsteils 18 gebildet, welche unter einem Winkelmaß voneinander beabstandet angeordnet sind.

Die gesamte Anzahl der Magnete 40, 42, 50, 52 kann variiert werden, um auch eine höhere oder niedrigere Winkelauflösung zu erzielen. Vorzugsweise ist das Winkelmaß zwischen den inneren Magneten 40, 42 im Wesentlichen gleich zu dem Winkelmaß der äußere Magnete 50, 52, so dass alle inneren Nordpole unmittelbar einem entsprechenden äußeren Nord- oder Südpol gegenüberstehen können. Hierdurch kann der Betrag bzw. die Amplitude der Anziehungs- und Abstoßungskräfte und die Raststärke der Rastpositionen maximiert werden. Unterschiedliche Winkelmaße können dazu verwendet werden, eine hiervon unterschiedliche Raststärke der Rastpositionen zu erzielen.

Der Hall-Sensor 44 könnte beispielsweise in Form eines Zweikanal-Hall-Sensors mit vier Leitungen 46 ausgebildet sein, wobei zwei davon Ausgangsleitungen sind. Beispiele für solche Sensoren sind Sensoren mit der Bezeichnung Allegro A 3425, der Firma Allegro MicroSystems Inc., 115 Northeast Cutoff, Worchester, MA, U.S.A., oder Melexis 90224, der Firma Melexis Microelectronic Systems, 41 Locke Road, Concord NH, USA. Ein solcher Sensor generiert und gibt ein sogenanntes Quadratur-Signal auf seinen Ausgangsleitungen in Abhängigkeit der Bewegung der äußeren Magnete 50, 52 relativ zu den inneren Magneten 40, 42 aus. Die Bezeichnung Quadratur-Signal bezieht sich auf eine Phasendifferenz von 90 Grad zwischen den beiden vom Sensor erzeugten Ausgangssignale, welche z.B. in Form von Rechtecksignalverläufen ausgegeben werden. Die Drehung der äußeren Magnete 50, 52 um eine Rastposition erzeugt zwei Signalveränderungen auf jeder Ausgangsleitung. Da diese Auflösung viermal so hoch ist wie die Auflösung der Rastpositionen, können geringe bzw. winzige Schwingungen bei einem magnetischen Umkehrpunkt vermieden werden, wodurch die Erzeugung von Ausgabesignalen des Sensors 44 vermieden werden können, welche eine Positionsveränderung der äußeren Magnete 50, 52 anzeigen.

Die Betätigungsvorrichtung 16 kann beispielsweise als Steuereingabeeinheit eingesetzt werden, beispielsweise zur Vorgabe einer Geschwindigkeit oder Drehzahl in einem Steuersystem (nicht gezeigt) für ein stufenlos variables Getriebe (nicht gezeigt) in einem Fahrzeug, welches beispielsweise in Form eines Traktors (nicht gezeigt) ausgeführt ist. Ein solches Steuersystem könnte derart programmiert oder ausgebildet sein, dass eine vorgebbare Abfolge von Signalen von der Betätigungsvorrichtung 16 generiert werden muss, bevor eine Geschwindigkeit bzw. Drehzahl erhöht oder verringert wird. Beispielsweise könnten für das Steuersystem wenigstens zwei geeignete Signalübergänge erforderlich sein, bevor eine Geschwindigkeits- bzw. Drehzahleinstellung verändert wird, so dass leichte mechanische Bewegungen keinen schwankenden elektrischen Ausgang an das Steuersystem zur Folge hat. Die erfindungsgemäße Betätigungsvorrichtung bzw. Bedienvorrichtung, welche Rastpositionen auf magnetischem Wege generiert, erfordert keine Kalibrierung oder Phaseneinstellung bei der Installation bzw. Montage oder während der Lebensdauer der Vorrichtung. Schwankungen können verhindert werden und die Rastpositionen unterliegen keinem Verschleiß, da kein mechanischer Kontakt in den Rastpositionen erfolgt.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Betätigungsvorrichtung zur drehbaren Betätigung, welche aufgrund einer magnetischen Wirkungsweise mehrere Rastpositionen aufweist, mit einem inneren Teil (22), einem äußeren Teil (18), einer Vielzahl innerer Magnete (40, 42), einer Vielzahl äußerer Magnete (50, 52) und einem Magnetfeldsensor (44), wobei das äußere Teil (18) das innere Teil (22) zumindest teilweise aufnimmt, wobei das innere Teil (22) zu dem äußeren Teil (18) verdrehbar angeordnet ist, wobei die inneren Magnete (40, 42) regelmäßig und peripher an dem inneren Teil (22) angeordnet sind, wobei die inneren Magnete (40, 42) in radialer Richtung ausgerichtete magnetische Nord- und Südpole aufweisen, wobei abwechselnd benachbarte innere Magnete (40, 42) abwechselnd in radialer Richtung nach außen ausgerichtete Nord- und Südpole aufweisen, wobei die äußeren Magnete (50, 52) regelmäßig an dem äußeren Teil (18) angeordnet sind, wobei die äußeren Magnete (50, 52) in radialer Richtung ausgerichtete magnetische Nord- und Südpole aufweisen, wobei abwechselnd benachbarte äußere Magnete (50, 52) abwechselnd in radialer Richtung nach innen ausgerichtete Nord- und Südpole aufweisen, wobei die inneren und äußeren Magnete (40, 42, 50, 52) sich gegenseitig anziehen und/oder abstoßen, um eine Vielzahl von Rastpositionen zu definieren, wenn das innere Teil (22) gegenüber dem äußeren Teil (18) gedreht wird, und wobei der Magnetfeldsensor (44) ein von der Drehung des inneren Teils (22) gegenüber dem äußeren Teil (18) abhängiges Signal generiert.

2. Betätigungsvorrichtung nach Anspruch 1, wobei das innere Teil (22) einen ersten Kranz (28) aufweist, wobei die inneren Magnete (40, 42) an dem ersten Kranz (28) angeordnet sind, wobei das äußere Teil (18) einen zweiten Kranz (38) aufweist, welcher zumindest teilweise den ersten Kranz (28) aufnimmt, wobei die äußeren Magnete (50, 52) an dem zweiten Kranz (38) angeordnet sind.

3. Betätigungsvorrichtung nach Anspruch 1 oder 2, wobei die inneren Magnete (40, 42) ein erstes Winkelmaß zueinander aufweisen, wobei die äußeren Magnete (50, 52) ein zweites Winkelmaß zueinander aufweisen und wobei vorzugsweise das erste Winkelmaß im Wesentlichen dem zweiten Winkelmaß entspricht.

4. Betätigungsvorrichtung nach einem der Ansprüche 1 bis 3, wobei die inneren Magnete (40, 42) gegenüberliegend zu den äußeren Magneten (50, 52) angeordnet sind.

5. Betätigungsvorrichtung nach einem der Ansprüche 1 bis 4, wobei die inneren und äußeren Magnete (40, 42, 50, 52) derart an den inneren bzw. äußeren Teilen (22, 18) angeordnet sind, dass zumindest ein Betriebszustand der Betätigungsvorrichtung vorgesehen ist, bei welchem die nach außen gerichteten Nordpole der inneren Magnete (40, 42) benachbart und/oder gegenüberliegend zu den nach innen gerichteten Südpolen der äußeren Magnete (50, 52) angeordnet sind und bei welchem die nach außen gerichteten Südpole der inneren Magnete (40, 42) benachbart und/oder gegenüberliegend zu den nach innen gerichteten Nordpolen der äußeren Magnete (50, 52) angeordnet sind.

6. Betätigungsvorrichtung nach einem der Ansprüche 1 bis 5, wobei die inneren und äußeren Magnete (40, 42, 50, 52) derart an den inneren bzw. äußeren Teilen (22, 18) angeordnet sind, dass zumindest ein Betriebszustand der Betätigungsvorrichtung vorgesehen ist, bei welchem die nach außen gerichteten Nordpole der inneren Magnete (40, 42) benachbart und/oder gegenüberliegend zu den nach innen gerichteten Nordpolen der äußeren Magnete (50, 52) angeordnet sind und bei welchem die nach außen gerichteten Südpole der inneren Magnete (40, 42) benachbart und/oder gegenüberliegend zu den nach innen gerichteten Südpolen der äußeren Magnete (50, 52) angeordnet sind.

7. Betätigungsvorrichtung nach einem der vorhergehenden Ansprüche, wobei eine Aussparung oder ein Schlitz (29) an dem inneren oder äußeren Teil (22, 18) ausgebildet ist, wobei der Magnetfeldsensor (44) in dem Schlitz (29) aufgenommen ist.

8. Betätigungsvorrichtung nach Anspruch 7, wobei die Aussparung oder der Schlitz (29) an dem ersten oder zweiten Kranz (28, 38) angeordnet ist.

9. Betätigungsvorrichtung nach Anspruch 7 oder 8, wobei die Aussparung oder der Schlitz (29) an dem inneren Teil (22) angeordnet ist, vorzugsweise an einer äußeren Oberfläche des ersten Kranzes (28).

10. Betätigungsvorrichtung nach einem der vorhergehenden Ansprüche, wobei das äußere Teil (18) eine äußere periphere Oberfläche (20) aufweist, welche zur Betätigung mit einem Finger, insbesondere einem Daumen, eines Bedieners dient, wobei die Oberfläche (20) vorzugsweise strukturiert und/oder gerippt ausgebildet ist und wobei die Betätigungsvorrichtung beispielsweise in Form eines Daumenrads ausgebildet ist.
